# EUROPEAN PATENT SPECIFICATION

(11) **EP 3 278 323 B1**
(45) Date of publication and mention of the grant of the patent: **15.01.2020**
(21) Application number: 16716052.2
(22) Date of filing: 01.04.2016
(51) Int. Cl.: G09B 9/04, G09B 9/048

(54) **MOTION ARRANGEMENT**
BEWEGUNGSANORDNUNG
AGENCEMENT DE DÉPLACEMENT

(30) Priority: 02.04.2015 GB 201505800
(43) Date of publication of application: 07.02.2018
(73) Proprietor: McLaren Applied Technologies Limited, Woking, Surrey GU21 4YH (GB)
(72) Inventor: GLOVER, Anthony Richard, Guildford Surrey GU1 1SW (GB); ODHAMS, Andrew, Woking Surrey GU21 4YH (GB)
(74) Representative: Slingsby Partners LLP
(86) International application number: PCT/GB2016/050939
(87) International publication number: WO 2016/156873

(56) References cited:
- GB-A- 2 378 687
- US-A1- 2005 277 092

## Description

This invention relates to a motion arrangement for moving a load. The motion arrangement may be especially suitable for use for a motion simulator, particularly a land vehicle motion simulator.

Motion simulators are widely used for simulating the motion of vehicles for training purposes and in games installations. A position for an occupant is mounted on a movable platform, and the platform is moved, usually by pistons that are mounted to it, to simulate the motion of the vehicle. In applications such as games where low fidelity of movement is acceptable a simple pivoting arrangement can be used to mount the platform. In higher fidelity applications such as aircraft training simulators the platform is normally mounted on a Stuart platform or hexapod. The Stuart platform has a platform which is connected to a base by six hydraulic or electromechanical pistons. The pistons are pivotally mounted to the base and to the platform. The occupant position is fixed on the platform. The pistons are operated in order to move the platform in three dimensions. Since there are six pistons the platform can be moved in six degrees of freedom, thereby offering realistic simulation.

The Stuart platform is well suited for simulating aircraft motion because it allows substantial movement of the platform in three dimensions. However, in order for significant horizontal motions to be imparted to the platform it must be located well above the base; otherwise the pistons do not have sufficient freedom of movement in the horizontal plane. Typically the base is mounted at ground level, so in order to simulate substantial horizontal motion the platform, with the occupant on it, must be lifted some distance off the ground. This is inconvenient for the occupant. It also means that a large volume of space around the simulator must be available in order to allow the simulator to move freely over its full spatial operating envelope.

Normally a structure is built on the platform to hold the occupant and to give the appearance of the environment that is being simulated. Another problem with the Stuart platform is that the entire weight of the platform and any occupant structure must be borne by the pistons. Therefore, the pistons must be powerful enough not just to move the platform and the structure but also to carry its weight. Applications in which substantial horizontal forces must be imparted include the simulation of motion of land vehicles such as racing cars.

In an alternative design of simulator the load could be supported on six or more rigid rods. At their upper ends the rods are attached to the load by flexible joints. At their lower ends each rod is attached by a spherical joint to a respective sled which runs on one of three horizontal tracks. The tracks are arranged spaced apart but parallel. By moving the sleds on the tracks the load can be moved with six degrees of freedom.

Another design of motion simulator is disclosed in GB 2 378 687. A simulator platform is supported on rocker mechanisms. Each rocker mechanism comprises a rocker arm slidably linked to the side of the platform. The base of the rocker arm is mounted on a first sled which can move the base of the arm along a linear track. A connecting rod extends between the upper end of the rocker arm and a second sled also movable on the track. The attachment point between the platform and each rocker arm can be moved vertically and in one horizontal direction by means of the sleds. Coordinated operation of all the rocker mechanisms is used to manipulate the simulator platform as required. This arrangement has some advantages over other structures described above, but has some drawbacks. In particular the rocker mechanisms must be large if the system is to impose larger amounts of vertical travel, as is required if the system is to simulate the motion of conventional road cars.

There is a need for an improved form of motion system, for example for road vehicle simulators.

According to the present invention there is provided a motion arrangement for moving a load with six degrees of freedom, the motion arrangement comprising: first, second and third primary link elements, each primary link element being (i) rotatably attached to a respective linearly movable driver element and (ii) slidably and rotatably attached to the load; a first intermediate link element attached to the first primary link element and to a fourth linearly movable drive element; a second intermediate link element attached to the second primary link element and to a fifth linearly movable drive element; the first intermediate link element being attached to the first primary link element at a location between the locations where the first primary link element is attached to its respective driver element and to the load, and the second intermediate link element being attached to the second primary link element at a location between the locations where the second primary link element is attached to its respective driver element and to the load.

The motion arrangement may comprise a third intermediate link element attached to the third primary link element and to a sixth linearly movable drive element, the third intermediate link element being attached to the third primary link element at a location between the locations where the third primary link element is attached to its respective driver element and to the load.

The driver elements may be sleds driveable relative to a base.

The motion arrangement may comprise a fourth primary link element, the fourth primary link element being (i) rotatably attached to a respective linearly movable driver element and (ii) slidably and rotatably attached to the load.

The locations at which the first, second and third primary links are coupled to the load may be non-collinear.

There may be means mounted between the load and the driver elements for moving the load relative to a ground or base in a direction parallel to a basal plane. Such means may be slidable couplings between each primary link element and the load.

The linearly movable driver elements may be configured for exclusively linear motion. The linearly movable drivable elements may each be drivable only along a single linear path. Those paths may be coplanar. Those paths may be parallel. The first and second drivable elements may be drivable along a common path. That/those paths may be parallel with the paths along which the first to third drivable elements are drivable. The first and second drivable elements may be drivable by a common linear motor. The fourth and/or fifth drivable elements may be drivable along/by the same path/motor. The third drivable element may be drivable along a path orthogonal to that along which the first and second drivable elements are drivable.

The first primary link element may be slidably attached to the load such that the load can translate with respect to the first primary link element along a first axis. The second primary link element may be slidably attached to the load such that the load can translate with respect to the second primary link element along a second axis. The first and second axes may be convergent. The first and second axes may be coplanar.

The driver elements of the first, second and third primary link elements may be linearly movable in a common plane.

The driver elements of the first, second and third primary link elements may be linearly movable in mutually parallel directions.

The range of motion of the motion arrangement may be such that for all configurations of the arrangement the locations of attachment of the first intermediate link element to the first primary link element and of the second intermediate link element to the second primary link element are lower than the locations of attachment of the first and second primary link elements to the load. The point of attachment of one or more of the intermediate link elements to the respective primary link elements may be such that it is between (a) a plane perpendicular to a line joining the points of attachment of that primary link element to its respective linearly drivable element and to the load and passing through the point of attachment of that primary link element to its respective linearly drivable element and (b) a plane parallel to that plane and passing through the point of attachment of that primary link element to the load. The range of motion of the motion arrangement may be such that that criterion is satisfied for all configurations of the arrangement.

One or more primary link elements may be attached by a respective revolute joint to their respective driver element.

One or more primary link elements may be attached by a respective spherically mobile joint to the load.

Each intermediate link element may be attached by a revolute joint to its respective primary link element. One or more primary link elements may be attached to the load at an attachment joint, and at least one intermediate link may be attached to its respective primary link element by the attachment joint. The attachment joint may be a respective spherically mobile joint to attach the respective primary link element to the load. One or more primary link elements may comprise an element such as a linear coupler by means of which it is slidably attached to the platform.

The driver element of each intermediate link element may be moveable along an axis collinear with the axis along which the driver element of the respective primary link element is movable.

The driver element of each intermediate link element is located inboard or outboard, with respect to the load, of the driver element of the respective primary link element.

Each primary link element may be in the form of a wishbone. Each wishbone may be broader at its attachment to its respective driver element than at its attachment to the load.

Each driver element may be a drivable component of a linear motor. Each driver element may be drivable with respect to a ground.

The motion arrangement may comprise an elastic element acting between components of the motion arrangement to at least partially support the weight of the load. The elastic element may be coupled to act between one of the primary link elements and one of the linearly movable driver elements. The elastic element may be coupled to act between (i) the linearly movable driver element to which one of the first, second and third primary link elements is attached and (ii) one of the fourth and fifth linearly movable driver elements.

The motion arrangement may comprise four primary sleds, each primary sled being coupled to the load by a respective connector strut that is attached to its primary sled by a revolute or spherical joint and to the load by a joint that permits rotation and linear motion, for example a cylindrical joint. Two, three or four of the connector struts may be coupled to respective secondary sleds by further connector struts, each further connector strut being attached to its connector strut by a revolute or spherical joint and to a respective secondary sled by a revolute or spherical joint. One or two of the connector struts may be not provided with such a further connector strut.

The sleds may be arranged so that the primary and secondary sleds serving a particular connector strut are constrained to slide along a common motion axis, for example defined by a single rail.

The load may include a cockpit for an occupant of the simulator.
Figure 1 shows a movable load platform for a simulator.
Figure 2 shows in detail the joint between a wishbone and the load platform of figure 1.
Figure 3 shows the platform of figure 1 arranged to perform as a land vehicle simulator.
Figure 4 illustrates a control system for the simulator of figure 3.

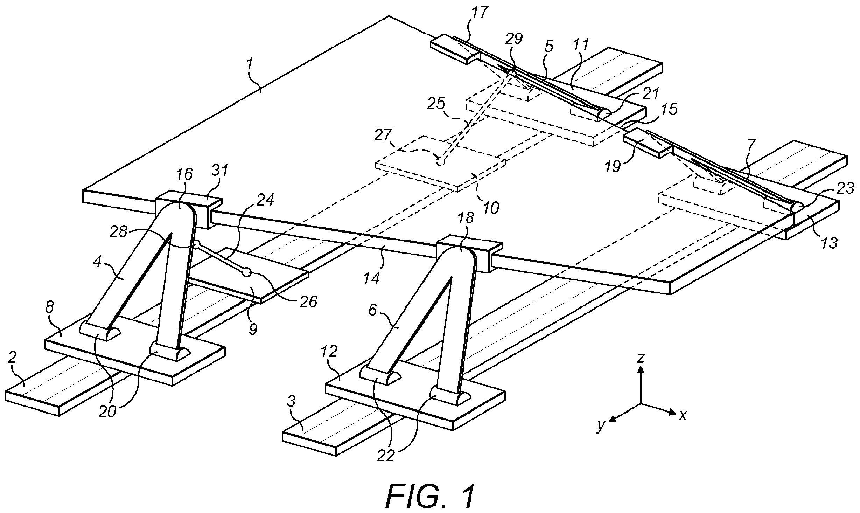

The load platform 1 of figure 1 is supported by four wishbones 4, 5, 6, 7. The lower end of each wishbone is attached to a respective sled 8, 11, 12, 13. Each sled runs on one of a pair of linear tracks 2, 3. The lower ends of intermediate links 24, 25 are also attached to respective sleds 9, 10. Each of sleds 9, 10 also runs on one of tracks 9, 10. The upper ends of the intermediate links 24, 25 are attached to respective ones of the wishbones at points intermediate between the load platform and their respective sleds. The attachment of the upper ends of the intermediate links 24, 25 may be made to the wishbones themselves or to the attachment between the wishbones and the load platform. In this arrangement, the position of the load platform can be controlled with six degrees of freedom by positioning the six sleds appropriately. Because the intermediate links are attached to the wishbones at points that are between the load and the tracks, the load can readily be given substantial vertical travel, permitting it to be used to simulate the motion of normal road vehicles.

In more detail, figure 1 shows a load platform 1 for a simulator together with an arrangement for supporting and moving the platform. The load platform is generally trapezoidal in this example, but need not be. The load platform may be generally diamond-shaped and/or rhombus-shaped. The side edges 14, 15 of the load platform may be curved along at least part of their length. The side edges 14, 15 of the load platform are convergent. The side edges are co-planar in this example, but need not be. For convenience the end of the platform where the side edges are further apart will be termed the rear of the platform, and the opposite end the front.

The load platform may be generally shaped as two trapezoids joined together at one of their parallel sides. Such a load platform may be a six-sided polygon. In this case, the side edges 14, 15 may be convergent with each other at each of their ends. The angle at which the side edges 14, 15 are convergent with each other at each of their ends may be different.

A first portion of the platform may have a pair of tracks attached to the platform and disposed such that they converge. The tracks may be co-planar or not. The tracks may be linear or not. The tracks may be defined by rails or channels or other suitable formations that permit constrained motion, along paths defined by the tracks, between the platform and runners supporting the platform. The tracks may be at the edge of the platform, or the platform may sit on or be suspended from the tracks. There may be a second portion of the platform with a second pair of tracks as set out above. The tracks of the first pair may be co-planar with or not coplanar with the tracks of the second pair. The tracks of the first pair may converge in a direction that is the same or different (e.g. opposite) to the direction in which the tracks of the second pair converge.

In the example of figure 1 below the load platform are two tracks 2, 3. In this example the tracks are linear, co-planar and parallel. The sleds 8-13 run on the tracks, and are arranged so that they can each independently be driven to a desired position on their track in order to control the position of the load platform. To that end the tracks can conveniently incorporate magnetways of linear motors, which interact with the sleds to move the sleds. The sleds could be driven in other ways. For example the tracks could comprise racks and the sleds could comprise motors and pinions which engage the racks and which are driven by the motors to move the sleds; alternatively the sleds could be moved along the tracks by threaded worms or lead screws; alternatively the sleds could be moved hydraulically. By virtue of running on a respective one of the tracks each sled is constrained to follow the path of that track; in this example to move along the linear path defined by that track. The tracks 2, 3 are disposed generally transversely to the side edges 14, 15 of the load platform 1.

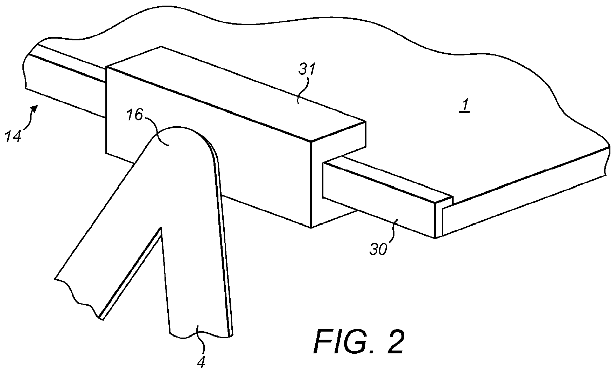

Four rigid wishbones 4, 5, 6, 7 run between the tracks 2, 3 and the load platform 1. Each wishbone is arranged so that at its upper end it has a single attachment point to the load platform; and at its lower end, where it is broader than at the upper end, it has two attachment points to a respective sled. The attachment structure at the upper end of the wishbones will be discussed in detail below with reference to figure 2. At the lower end of each wishbone the attachment points to the respective sled constitute a common revolute joint between the wishbone and the sled. The revolute joints between the wishbones and the sleds are designated 20, 21, 22, 23 in figure 1. The axis of each of those revolute joints is perpendicular to the track on which the respective sled runs. Two of the wishbones (4, 5) run on one of the tracks (2), and two of the wishbones (6, 7) run on the other track (3). One wishbone running on each track is attached to each of the sides 14, 15 of the load platform. Thus the upper ends of wishbones 4, 6, which run on different ones of the tracks, are both attached to side 14; and the upper ends of wishbones 5, 7, which also run on different ones of the tracks are both attached to side 15.

In the case of the load platform being generally shaped as two trapezoids joined together, one wishbone of each of the sides 14, 15 are attached to one of the trapezoids and one wishbone of each of the sides 14, 15 are attached to the other trapezoid.

The intermediate links 24, 25 are rigid and extend between respective ones of the wishbones and further sleds 9, 10. Intermediate link 24 extends between wishbone 4 and sled 9. Intermediate link 25 extends between wishbone 5 and sled 10. In this example the sled of each intermediate link runs on the same track as the sled of the wishbone to which it is attached, but it could run on another track, which need not be a track on which the sled of any wishbone runs. In this example the sled of each intermediate link is arranged inboard of the sled of the wishbone to which it is attached, but it could be arranged outboard. In this example the intermediate links are attached to the rear wishbones 4, 5, but they could instead be attached to the front wishbones or to one of the front wishbones and one of the rear wishbones. Each intermediate link is attached flexibly to its sled by a joint 26, 27. This may be a spherical joint or a revolute joint whose axis is perpendicular to the axis of the track on which the sled of that intermediate link runs. Each intermediate link is attached flexibly to its wishbone by a joint 28, 29. This may be a spherical joint or a revolute joint whose axis is perpendicular to the axis of the track on which the sled of that intermediate link runs. Whilst joints 28, 29 are shown being attached to respective wishbone 4, 5, it will be appreciated that one or more of joints 28, 29 may be attached to respective runner 31 associated with its respective wishbone 4, 5.

The linear motors for the front sleds could have common magnetways. The individual linear motors for moving each front sled would then be defined electrically in operation of the motors. The same could be done for the rear sleds.

Figure 2 shows in more detail the mechanism by which wishbone 4 is attached to the side 14 of the load platform 1. The attachments between the other wishbones and the rails are analogous. A linear rail 30 is disposed along the side 14 of the load platform. At the upper end of the wishbone 4 is a runner 31 which can slide along the rail 30. The runner may comprise a bearing race to permit it to move freely along the rail. The runner 31 is attached to the wishbone 4 by spherical joint 16. Joint 16 could be a Cardan joint or of another form. The other wishbones are attached to respective runners by respective spherical joints 17-19. A similar rail extends along the opposite side 15 of the platform 1. Joint 28 and/or joint 29 may be attached to the respective runner 31 of wishbone 4, 5.

The rails (e.g. rail 30) along the sides of the platform are non-parallel. They are closer together where they pass over one of the tracks (3) than where they pass over the other of the tracks (2).

Figure 1 shows the runners of the wishbones on each side of the load being connected to a common rail (e.g. 30). There could be additional rails, and the runners of the wishbones on each side could be connected to different rails. The rails to which the wishbones on each side of the load are connected could be parallel or could be angularly offset from one another.

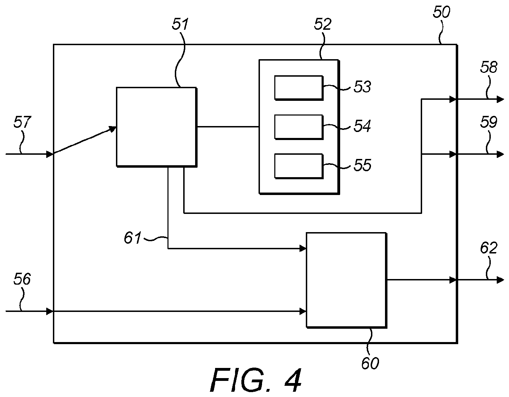

The operation of the system will now be described. The positions of the sleds 8-13 are independently controllable by a controller 50. (See figure 4). When the sleds are in a particular set of positions along their tracks, the position of the platform 1 is fixed both translationally and rotationally. By moving the sleds the platform 1 can be controlled in six degrees of freedom. For example, with the axes defined as shown in figure 1 motions can be obtained as follows:
- Surge (translation along the X axis): When the sleds 8, 9, 12 that are coupled to one side rail 14 are moved towards the sleds 10, 11, 13 that are coupled to the other side rail 15 the platform 1 can be forced to move rearwards by the rails (e.g. 30) which are disposed along its sides 14, 15 sliding with respect to the runners (e.g. 31) on the ends of the wishbones. This motion arises because the sides of the platform are convergent. Conversely, when the sleds 8, 9, 12 that are coupled to one side rail 14 are moved away from the sleds 10, 11, 13 that are coupled to the other side rail 15 the platform 1 can be forced to move forwards.
- Sway (translation along the Y axis): When all the sleds 8-13 are moved together in a common direction along the tracks the platform 1 can be translated in that direction.
- Heave (translation along the Z axis): When the sleds 8, 12 that bear the wishbones 4, 6 on one side of the platform are moved away from the sleds 11, 13 that bear the wishbones on the other side of the platform, and also the sleds 9, 10 that bear the intermediate links are moved towards each other, the platform can be lowered.
- Roll (rotation about the X) axis). Roll can be achieved by moving the sleds that bear the wishbones on one side of the platform (e.g. sleds 8, 12) in a common direction whilst moving a sled (e.g. sled 9) that bears one of the intermediate links so as to alter the inclination of the wishbone to which it is attached.
- Pitch (rotation about the Y axis). Pitch can be achieved by moving the sleds 9, 10 that bear the intermediate links so as to alter the inclination of the wishbones to which they are attached.
- Yaw (rotation about the Z axis). Yaw can be achieved by moving the forward sleds 12, 13 in one direction and the rear sleds 8-11 in the opposite direction.

The individual motions described above can be combined to give composite motions of the platform. The intermediate links may be attached to other ones of the wishbones, in which case the behaviours described above can be adapted accordingly.

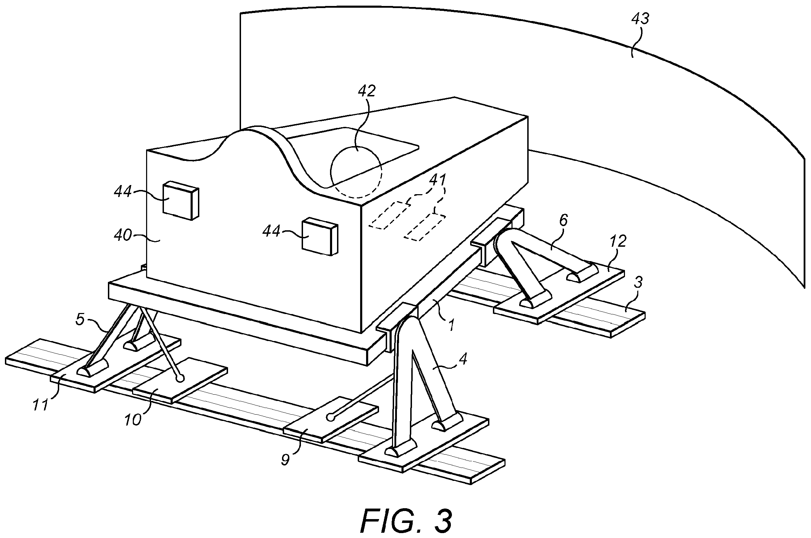

Figure 3 shows the platform of figure 1 arranged to function as part of a simulator for simulating the motion of a land vehicle, for example a car. A cabin 40 for an occupant is mounted on the platform. The cabin may be a part vehicle chassis. It may include a cockpit to hold the occupant. The cabin includes user input devices such as accelerator and brake pedals 41 and a steering wheel 42. A display screen 43 is arranged around the platform for displaying a view of the environment that is being simulated. Alternatively the display can be borne by the platform, or the occupant could wear a headset incorporating a display. Loudspeakers 44 are located on or near the platform.

Figure 4 shows a control system for the simulator. The control system comprises a controller 50 having a processor 51 and a memory 52. The memory stores in a non-transient way:
(i) code 53 that is executable by the processor to enable the controller to control the motion of the platform in the desired way;
(ii) environment data 54 which defines the environment that is to be simulated: for example the layout of a track, the appearance of the track and its surrounding scenery and the performance characteristics of the track such as its heights, grip levels and cambers;
(iii) performance data 55 which defines the performance characteristics of the vehicle being simulated, for example its acceleration and deceleration rates, its roll and grip characteristics and the noises it makes.

To provide feedback to the control system illustrated in figure 4 each linear motor has a position sensor which generates a signal indicative of the position of the motor. The position sensors could be linear encoders mounted next to the linear motor tracks.

In operation the controller 50 receives inputs 56 from position sensors on the sleds 8-13 and control inputs 57 from the user input devices 41, 42. By executing the code 53 processor 51 forms a model of how the simulated vehicle defined by data 55 would behave under those control inputs in the environment defined by data 54. The outputs of that model are a desired position of the platform 1 with six degrees of freedom, sound to be played out by loudspeakers 44 and a video feed to appear on display screen 43. The sound and video are passed at 58 and 59 to the loudspeakers and the display. The desired position is passed to a sled controller 60. The sled controller receives the current positions of the sleds as input at 56 and the desired position and acceleration of the platform with six degrees of freedom at 61 and forms control outputs 62 for each of the six sleds so as to drive them to cause the platform to adopt the required position. The sled controller 60 could be implemented in software or hardware. The processor 51 could be implemented by one or more CPUs. The memory 52 could be implemented by one or multiple physical memory units. The controller 50 could be in a single physical unit or divided between multiple such units.

Springs (not shown in the figures), which could be mechanical or gas springs, can be coupled between each intermediate link 24, 25 and its respective wishbone 4, 5 to help support the weight of the platform. In the case of gas springs the pressure in the springs could be actuated by the controller, e.g. in dependence on the static weight of the load. Mechanical or air springs could be provided so as to act between any pair of the wishbones and/or between any wishbone and its sled and/or between any wishbone and the load. End stop buffers (not shown) can be provided at the ends of the rails to prevent over-travel.

In addition to achieving surge through urging the sleds of each side together or apart, as described above, one or more actuators could be added to drive the surge axis more directly. For example, this could be achieved by mounting one or more linear motor magnetways on the platform, parallel to the platform rails. The slider of each motor would be attached to one of the brackets (e.g. 31) on the distal ends of the wishbones.

To reduce the load on the sled motors during prolonged surge excursions a movable counter-weight could be attached to the mechanism (e.g. to the load or to the distal ends of the wishbones). The counter-weight is arranged to be driven in the opposite direction to the principal load in surge. Motion of the counter-weight could be driven by a motor carried by the load and arranged to drive the counter-weight relative to the load in the surge direction, or by the action of the wishbones on a second pair of rails which are attached to the counterweight and which converge in the opposite direction to the rails that are attached to the load. In one convenient arrangement the counterweight could be provided with one or more pair of rails that converge in the opposite direction to the rails on the load. Those rails could be slidably attached to a pair of the primary supports / wishbones which are attached to opposing rails of the load so that when the attachment points of those supports move together or apart the load and the counterweight will move in opposite directions.

In the arrangement shown in the figures the load is supported by four wishbones, two of which are attached to independently controllable intermediate links. In an alternative configuration the load could be supported by only three wishbones, each of which is flexibly attached to an independently controllable intermediate link. In the latter configuration, there are three linearly movable primary sleds, each of which is carries a respective primary support strut (e.g. a wishbone) which is also flexibly attached to the load. There could be a revolute joint between each primary strut and its sled and a spherical joint between each primary strut and the load. The primary struts are rigid, and preferably attached at their opposite ends to the sleds and the load. There are also three secondary sleds. Each secondary sled is linearly movable and is flexibly attached to a respective secondary support strut which is in turn flexibly attached to a respective one of the primary support struts at a point intermediate between its connection to its primary sled and to the load. Each secondary strut may be attached by a revolute joint to its sled and by another revolute joint to its primary strut. The secondary struts are rigid, and preferably attached at their opposite ends to the sleds and the primary struts. The sleds of each pair of an interattached primary and secondary strut may be movable linearly along parallel axes, and optionally collinearly. Two of the primary sleds may be attached to the side rails of the load so as to oppose each other for forcing the load to move in surge. The remaining primary strut may be attached centrally to the load, for example by a single rail running along the centreline of the side-rails by which the other wishbones are attached to the load, or by one of those other side-rails, or by a side-rail at a different angle to those other side-rails.

In the example shown in figure 1 supports 4 and 5 are driven by primary sleds 8, 11 and secondary sleds 9, 10, whereas supports 6 and 7 are driven only by primary sleds 12, 13. In other examples one or both of supports 6, 7 could be driven by a primary and a secondary sled. This could give greater control authority, particularly over jacking motion in Z of the end of the sled at which supports 4 and 5 are attached. A further alternative is for only one of the sleds 8, 11 at a first end of the sled to be driven by a secondary sled, and for only one of the sleds 12, 13 at the other end of the sled to be driven by a secondary sled. In each case a secondary sled is coupled to the respective support by a rigid element that can pivot with respect to the sled and the support, as with elements 24, 25 in the example of figure 1.

Instead of a secondary sled and additional connector element connecting that sled to the respective support 4, 5, 6, 7, other mechanisms could be used to constrain the inclination of the support relative to the sled. For example a rotational drive could be implemented at the rotational joint between the support and its primary sled.

The present structure is arranged to provide a compact mechanism for driving the motion platform with principal motions in the X and Y axes. In comparison to the Stuart platform the present structure allows substantial forces in the X and Y directions to be imparted without requiring the platform to be far above the base. This makes it significantly more convenient for the occupant to enter the chassis. The platform rails and especially the base rails can straightforwardly be made relatively long, allowing relatively large displacements to be imparted in the horizontal plane. For many road vehicles the greatest potential forces are in the surge and sway directions, which correspond to cornering and straight-line acceleration and braking. Therefore, it is preferred that the chassis is mounted relative to the platform rails and the base rails so that the sway and surge axes are in a plane parallel to all those rails. The surge axis is preferably parallel to the forward axis of the chassis and the sway axis is preferably perpendicular to the forward axis and the upward axis of the chassis. The forward and upward axes of the chassis will typically be defined by reference to an occupant/operator position in the chassis. Where the occupant position has a seat the forward axis is typically the forward-facing direction of the seat. The highest potential for force may often be in the sway axis since higher forces may often be expected during cornering than in straight-linear acceleration and braking. Therefore, it is most preferred that the sway axis is parallel to the base rails. This implies that the forward orientation of the chassis is perpendicular to the base rails.

The platform 1 need not be trapezoidal: for instance the platform rails (e.g. 30) could be attached in their tapering configuration to the underside of a square plate. Alternatively, the platform could be omitted and platform rails could be attached directly to the chassis.

In figure 1 the wishbones are shown as being of bifurcated form. Instead, the equivalent link could be provided by a single strut, or the wishbones could be arranged with their bifurcated ends coupled to the load. In these latter cases the respective elements could be coupled by spherical joints to the sleds and by revolute joints to the load. In general, each wishbone can be constituted by a fully or partially rigid element.

Each revolute joint could be a conventional rotating hinge joint, or a flexure joint, or of another form.

One or more of the intermediate links could have spherical joints at its connection to the respective sled and/or its connection to the respective primary link / wishbone.

The primary links / wishbones and the intermediate links could be rigid. Alternatively any of those links could be flexible and/or elastic, for example a spring cantilever.

The simulator could be configured for simulating a vehicle, such as a road vehicle.

Additional means for supporting the load could be provided, for example an elastic element such as a spring or a driven element such as a hydraulic piston. Such means could be provided under the load and extending between the load and a base, or above the load and extending between the load and an upper support structure such as a gantry or ceiling. Such means could be mounted to the load and/or the base or upper support in such a way that it can accommodate lateral motion of the load with respect to the base or support.

The arrangement described above could be used for other applications such as machine tools, vibration test equipment, pick-and-place machines, and tracking systems.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and within the scope of the claims. The applicant indicates that aspects of the present invention may consist of any such individual feature or combination of features. In view of the foregoing description it will be evident to a person skilled in the art that various modifications may be made within the scope of the invention.

## Claims

1. A motion arrangement for moving a load with six degrees of freedom, the motion arrangement comprising:
first, second and third primary link elements (4,5,6), each primary link element being (i) rotatably attached to a respective linearly movable driver element (8,11,12) and (ii) slidably and rotatably attached to the load (1);
a first intermediate link element (24) attached to the first primary link element (4) and to a fourth linearly movable drive element (9);
a second intermediate link element (25) attached to the second primary link element (5) and to a fifth linearly movable drive element (10);
the first intermediate link element being attached to the first primary link element at a location between the locations where the first primary link element is attached to its respective driver element and to the load, and the second intermediate link element being attached to the second primary link element at a location between the locations where the second primary link element is attached to its respective driver element and to the load.

2. A motion arrangement as claimed in claim 1, comprising a third intermediate link element attached to the third primary link element (6) and to a sixth linearly movable drive element, the third intermediate link element being attached to the third primary link element at a location between the locations where the third primary link element is attached to its respective driver element and to the load.

3. A motion arrangement as claimed in claim 1, comprising a fourth primary link element (7), the fourth primary link element being (i) rotatably attached to a respective linearly movable driver element (13) and (ii) slidably and rotatably attached to the load.

4. A motion arrangement as claimed in claim 3, wherein the third and fourth primary link elements are not attached to further intermediate link elements.

5. A motion arrangement as claimed in any preceding claim, wherein the first primary link element is slidably attached to the load such that the load can translate with respect to the first primary link element along a first axis, and the second primary link element is slidably attached to the load such that the load can translate with respect to the second primary link element along a second axis, the first and second axes being convergent.

6. A motion arrangement as claimed in any preceding claim, wherein the driver elements of the first, second and third primary link elements are linearly movable in a common plane and/or in mutually parallel directions.

7. A motion arrangement as claimed in any preceding claim, wherein the range of motion of the arrangement is such that for all configurations of the arrangement the locations of attachment of the first intermediate link element to the first primary link element and of the second intermediate link element to the second primary link element are lower than the locations of attachment of the first and second primary link elements to the load.

8. A motion arrangement as claimed in any preceding claim, wherein each primary link element is attached by a revolute joint to its respective driver element and/or wherein each primary link element is attached by a spherically mobile joint (28,29) to the load.

9. A motion arrangement as claimed in any preceding claim, wherein each intermediate link element is attached by a revolute joint (28, 29) to its respective primary link element.

10. A motion arrangement as claimed in any preceding claim, wherein the driver element of each intermediate link element is moveable along an axis collinear with the axis along which the driver element of the respective primary link element is movable.

11. A motion arrangement as claimed in any preceding claim, wherein the driver element of each intermediate link element is located inboard or outboard, with respect to the load, of the driver element of the respective primary link element.

12. A motion arrangement as claimed in any preceding claim, wherein each primary link element is in the form of a wishbone, and each wishbone is broader at its attachment to its respective driver element than at its attachment to the load.

13. A motion arrangement as claimed in any preceding claim, wherein each driver element is a drivable component of a linear motor.

14. A motion arrangement as claimed in any preceding claim, comprising an elastic element acting between components of the motion arrangement to at least partially support the weight of the load, wherein the elastic element is coupled to act between one of the primary link elements and one of the linearly movable driver elements, and/or wherein the elastic element is coupled to act between (i) the linearly movable driver element to which one of the first, second and third primary link elements is attached and (ii) one of the fourth and fifth linearly movable driver elements.

15. A motion simulator comprising a motion arrangement as claimed in any preceding claim, the load including a cockpit for an occupant of the simulator.

## Patentansprüche

1. Bewegungsanordnung zum Bewegen einer Last mit sechs Freiheitsgraden, wobei die Bewegungsanordnung Folgendes umfasst:
ein erstes, zweites und drittes Primärverbindungselement (4, 5, 6), wobei jedes Primärverbindungselement (i) drehbar an einem jeweiligen, linear beweglichen Antriebselement (8, 11, 12) befestigt ist und (ii) verschiebbar und drehbar an der Last (1) befestigt ist;
ein erstes Zwischenverbindungselement (24), das an dem ersten Hauptverbindungselement (4) und an einem vierten linear beweglichen Antriebselement (9) befestigt ist;
ein zweites Zwischenverbindungselement (25), das an dem zweiten Primärverbindungselement (5) und an einem fünften, linear beweglichen Antriebselement (10) befestigt ist;
wobei das erste Zwischenverbindungselement an dem ersten Primärverbindungselement an einer Stelle zwischen den Stellen befestigt ist, an denen das erste Primärverbindungselement an seinem jeweiligen Antriebselement und an der Last befestigt ist, und wobei das zweite Zwischenverbindungselement an dem zweiten Primärverbindungselement an einer Stelle zwischen den Stellen befestigt ist, an denen das zweite Primärverbindungselement an seinem jeweiligen Antriebselement und an der Last befestigt ist.

2. Bewegungsanordnung nach Anspruch 1, die ein drittes Zwischenverbindungselement umfasst, das an dem dritten Primärverbindungselement (6) und an einem sechsten, linear beweglichen Antriebselement befestigt ist, wobei das dritte Zwischenverbindungselement an dem dritten Primärverbindungselement an einer Stelle zwischen den Stellen befestigt ist, an denen das dritte Primärverbindungselement an seinem jeweiligen Antriebselement und an der Last befestigt ist.

3. Bewegungsanordnung nach Anspruch 1, die ein viertes Primärverbindungselement (7) umfasst, wobei das vierte Primärverbindungselement (i) drehbar an einem jeweiligen linear beweglichen Antriebselement (13) befestigt ist und (ii) verschiebbar und drehbar an der Last befestigt ist.

4. Bewegungsanordnung nach Anspruch 3, wobei das dritte und das vierte Primärverbindungselement nicht an weiteren Zwischenverbindungselementen befestigt sind.

5. Bewegungsanordnung nach einem der vorhergehenden Ansprüche, wobei das erste Primärverbindungselement derart verschiebbar an der Last befestigt ist, dass sich die Last in Bezug auf das erste Primärverbindungselement entlang einer ersten Achse verschieben kann, und das zweite Primärverbindungselement derart verschiebbar an der Last befestigt ist, dass sich die Last in Bezug auf das zweite Primärverbindungselement entlang einer zweiten Achse verschieben kann, wobei die erste und die zweite Achse konvergent sind.

6. Bewegungsanordnung nach einem der vorhergehenden Ansprüche, wobei die Antriebselemente von dem ersten, zweiten und dritten Primärverbindungselement in einer gemeinsamen Ebene und/oder in zueinander parallelen Richtungen linear beweglich sind.

7. Bewegungsanordnung nach einem der vorhergehenden Ansprüche, wobei der Bewegungsbereich der Anordnung derart ist, dass, für alle Konfigurationen der Anordnung, die Stellen der Befestigung des ersten Zwischenverbindungselements an dem ersten Primärverbindungselement und des zweiten Zwischenverbindungselements an dem zweiten Primärverbindungselement tiefer liegen als die Stellen der Befestigung des ersten und zweiten Primärverbindungselements an der Last.

8. Bewegungsanordnung nach einem der vorhergehenden Ansprüche, wobei jedes Primärverbindungselement durch ein Drehgelenk an seinem jeweiligen Antriebselement befestigt ist, und/oder wobei jedes Primärverbindungselement durch ein sphärisch bewegliches Gelenk (28, 29) an der Last befestigt ist.

9. Bewegungsanordnung nach einem der vorhergehenden Ansprüche, wobei jedes Zwischenverbindungselement durch ein Drehgelenk (28, 29) an seinem jeweiligen Primärverbindungselement befestigt ist.

10. Bewegungsanordnung nach einem der vorhergehenden Ansprüche, wobei das Antriebselement jedes Zwischenverbindungselements entlang einer Achse beweglich ist, die kollinear zu der Achse ist, entlang der das Antriebselement des jeweiligen Primärverbindungselements beweglich ist.

11. Bewegungsanordnung nach einem der vorhergehenden Ansprüche, wobei das Antriebselement jedes Zwischenverbindungselements, in Bezug auf die Last, innen oder außen am Antriebselement des jeweiligen Primärverbindungselement angeordnet ist.

12. Bewegungsanordnung nach einem der vorhergehenden Ansprüche, wobei jedes Primärverbindungselement in Form eines Dreieckslenkers vorliegt und jeder Dreieckslenker an seiner Befestigungsstelle mit seinem jeweiligen Antriebselement breiter ist als an seiner Befestigungsstelle mit der Last.

13. Bewegungsanordnung nach einem der vorhergehenden Ansprüche, wobei jedes Antriebselement ein antreibbares Bauteil eines Linearmotors ist.

14. Bewegungsanordnung nach einem der vorhergehenden Ansprüche, die ein elastisches Element umfasst, das so zwischen Bauteilen der Bewegungsanordnung wirkt, dass es das Gewicht der Last zumindest teilweise trägt, wobei das elastische Element so verbunden ist, dass es zwischen einem von den Primärverbindungselementen und einem von den linear beweglichen Antriebselementen wirkt, und/oder wobei das elastische Element so verbunden ist, dass es wirkt zwischen (i) dem linear beweglichen Antriebselement, an dem das erste, das zweite und das dritte Primärverbindungselement befestigt sind, und (ii) einem von dem vierten und dem fünften linear beweglichen Antriebselement.

15. Bewegungssimulator, der eine Bewegungsanordnung nach einem der vorhergehenden Ansprüche umfasst, wobei die Last ein Cockpit für einen Insassen des Simulators beinhaltet.

## Revendications

1. Agencement de mouvement pour le déplacement d'une charge avec six degrés de liberté, l'agencement de mouvement comprenant :
les premier, deuxième et troisième éléments de liaison primaire (4, 5, 6), chaque élément de liaison primaire étant (i) fixé de manière rotative à un élément d'entraînement mobile linéairement respectif (8, 11, 12) et (ii) fixé de manière coulissante et pivotante à la charge (1) ;
un premier élément de liaison intermédiaire (24) fixé au premier élément de liaison primaire (4) et à un quatrième élément d'entraînement mobile linéairement (9) ;
un deuxième élément de liaison intermédiaire (25) fixé au deuxième élément de liaison primaire (5) et à un cinquième élément d'entraînement mobile linéairement (10) ;
le premier élément de liaison intermédiaire étant fixé au premier élément de liaison primaire sur un emplacement entre les emplacements où le premier élément de liaison intermédiaire est fixé à son élément d'entraînement respectif et à la charge, et le deuxième élément de liaison intermédiaire est fixé au deuxième élément de liaison primaire élément sur un emplacement situé entre les emplacements où le deuxième élément de liaison primaire est fixé à son élément d'entraînement respectif et à la charge.

2. Agencement de mouvement selon la revendication 1, comprenant un troisième élément de liaison intermédiaire fixé au troisième élément de liaison primaire (6) et à un sixième élément d'entraînement mobile linéairement, le troisième élément de liaison intermédiaire étant fixé au troisième élément de liaison primaire sur un emplacement entre les emplacements où le troisième élément de liaison primaire est fixé à son élément d'entraînement respectif et à la charge.

3. Agencement de mouvement selon la revendication 1, comprenant un quatrième élément de liaison primaire (7), le quatrième élément de liaison primaire étant (i) fixé de manière pivotante à un élément d'entraînement mobile linéairement (13) et (ii) fixé de manière coulissante et pivotante à la charge.

4. Agencement de mouvement selon la revendication 3, dans lequel les troisième et quatrième éléments de liaison primaire ne sont pas fixés à des éléments de liaison intermédiaire supplémentaires.

5. Agencement de mouvement selon l'une quelconque des revendications précédentes, dans lequel le premier élément de liaison primaire est fixé de manière coulissante à la charge de sorte que la charge puisse translater par rapport au premier élément de liaison primaire le long d'un premier axe, et le deuxième élément de liaison primaire est fixé de manière coulissante à la charge de sorte que la charge puisse translater par rapport au deuxième élément de liaison primaire le long d'un deuxième axe, les premier et deuxième axes étant convergents.

6. Agencement de mouvement selon l'une quelconque des revendications précédentes, dans lequel les éléments d'entraînement des premier, deuxième et troisième éléments de liaison primaire sont déplaçables linéairement dans un plan commun et/ ou dans des directions parallèles mutuellement.

7. Agencement de mouvement selon l'une quelconque des revendications précédentes, dans lequel l'amplitude de mouvement de l'agencement est telle que pour toutes les configurations de l'agencement, les emplacements de fixation du premier élément de liaison intermédiaire au premier élément de liaison primaire et du deuxième élément de liaison intermédiaire au deuxième élément de liaison primaire sont inférieurs aux emplacements de fixation des premier et deuxième éléments de liaison primaire à la charge.

8. Agencement de mouvement selon l'une quelconque des revendications précédentes, dans lequel chaque élément de liaison primaire est fixé par une articulation tournante à son élément d'entraînement respectif et/ ou dans lequel chaque élément de liaison primaire est fixé par une articulation mobile sphériquement (28, 29) à la charge.

9. Agencement de mouvement selon l'une quelconque des revendications précédentes, dans lequel chaque élément de liaison intermédiaire est fixé par une articulation tournante (28, 29) à son élément de liaison primaire respectif.

10. Agencement de mouvement selon l'une quelconque des revendications précédentes, dans lequel l'élément d'entraînement de chaque élément de liaison intermédiaire est mobile le long d'un axe colinéairement avec l'axe le long duquel l'élément d'entraînement de l'élément de liaison primaire respectif est mobile.

11. Agencement de mouvement selon l'une quelconque des revendications précédentes, dans lequel l'élément d'entraînement de chaque élément de liaison intermédiaire est situé à l'intérieur ou à l'extérieur, par rapport à la charge, de l'élément d'entraînement de l'élément de liaison primaire respectif.

12. Agencement de mouvement selon l'une quelconque des revendications précédentes, dans lequel chaque élément de liaison primaire a la forme d'un triangle, et chaque triangle est plus large à l'endroit de sa fixation à son élément d'entraînement respectif qu'à l'endroit de sa fixation à la charge.

13. Agencement de mouvement selon l'une quelconque des revendications précédentes, dans lequel chaque élément d'entraînement est un composant pouvant être entrainé d'un moteur linéaire.

14. Aménagement de mouvement selon l'une quelconque des revendications précédentes, comprenant un élément élastique agissant entre des composants de l'agencement de mouvement pour au moins partiellement supporter le poids de la charge, dans lequel l'élément élastique est couplé pour agir entre l'un des éléments de liaison primaire et l'un des éléments d'entraînement mobile linéairement et/ ou dans lequel l'élément élastique est couplé pour agir entre (i) l'élément d'entraînement mobile linéairement auquel un des premier, deuxième et troisième éléments de liaison primaire est fixé et (ii) un des quatrième et cinquième éléments d'entraînement mobiles linéairement.

15. Simulateur de mouvement comprenant un agencement de mouvement selon l'une quelconque des revendications précédentes, la charge comprenant un cockpit pour un occupant du simulateur.
